# EUROPÄISCHE PATENTSCHRIFT

(11) **EP 2 640 992 B1**
(45) Veröffentlichungstag und Bekanntmachung des Hinweises auf die Patenterteilung: **15.03.2017**
(21) Anmeldenummer: 11818984.4
(22) Anmeldetag: 07.11.2011
(51) Int. Cl.: F16D 13/75

(54) **KUPPLUNGSVORRICHTUNG**
CLUTCH DEVICE
DISPOSITIF D'EMBRAYAGE

(30) Priorität: 19.11.2010 DE 102010052021; 24.08.2011 DE 102011081475; 24.08.2011 DE 102011081476
(43) Veröffentlichungstag der Anmeldung: 25.09.2013
(73) Patentinhaber: Schaeffler Technologies AG & Co. KG, 91074 Herzogenaurach (DE)
(72) Erfinder: RABER, Christoph, 66564 Ottweiler-Steinbach (DE)
(86) Internationale Anmeldenummer: PCT/DE2011/001937
(87) Internationale Veröffentlichungsnummer: WO 2012/065588

(56) Entgegenhaltungen:
- EP-A2- 0 769 632
- DE-A1-102005 058 844
- US-A- 4 228 883

## Beschreibung

Die vorliegende Erfindung betrifft eine Kupplungsvorrichtung gemäß dem Oberbegriff des Patentanspruchs 1.

Aus der DE 10 2008 051 100 A1 ist eine Reibungskupplung bekannt, bei der der sich infolge Belagsverschleißes der Reibbeläge ändernder Betriebspunkt selbsttätig nachgestellt wird. Hierbei ist an der Anpressplatte ein Spindeltrieb vorgesehen, der den Rampenring bei vorliegendem Verschleiß in eine Richtung verdreht. Hierzu ist an dem Gehäuse eine Klinke fest angeordnet, die ein Ritzel des Spindeltriebs verdreht, indem bei Überschreiten eines vorgegebenen Verschleißwegs vor dem Öffnen ein Formschluss zwischen Ritzel und Klinke gebildet wird und beim Öffnen der Reibungskupplung der Betriebspunkt durch Verdrehen des Ritzels durch die Klinke korrigiert wird. Hierbei steht lediglich eine diskontinuierliche und schrittweise Kompensation des Reibbelagsverschleißes zur Verfügung.

Aus der US 4,228,883 ist ein Kupplungsvorrichtung bekannt, die auf den Oberbegriff des Patentanspruchs 1 lesbar ist.

Es ist Aufgabe der vorliegenden Erfindung, eine Kupplungsvorrichtung anzugeben, bei der ein sich ändernder Betriebspunkt in einfacher Weise möglichst genau korrigiert werden kann.

Erfindungsgemäß gelöst wird diese Aufgabe durch eine Kupplungsvorrichtung gemäß Patentanspruch 1. Bevorzugte Ausführungsbeispiele sind in den abhängigen Ansprüchen dargelgt.

Die Kupplungsvorrichtung ist mit zumindest einer in axialer Richtung durch ein Hebelelement ein- und/oder ausrückbaren, im eingerückten Zustand reibschlüssigen Drehmomentübertragungseinrichtung und zumindest einer Verschleißnachstelleinrichtung ausgestattet, die zumindest einen drehbaren und durch das Hebelelement zumindest zeitweise klemmbaren Rampenring und zumindest einen auf den Rampenring wirkenden, drehbar gelagerten Spindeltrieb mit einer Spindelwelle aufweist, wobei die Verschleißnachstelleinrichtung zumindest eine stufenlose, zumindest eine Schlingfeder oder zumindest einen Hülsenfreilauf aufweisende Freilaufeinheit zur Drehung der Spindelwelle bei einem sensierten Verschleißzustand der Drehmomentübertragungseinrichtung aufweist.

Die Kupplungsvorrichtung weist vorzugsweise ein Gehäuse auf, in dem die Drehmomentübertragungseinrichtung angeordnet ist. Die Drehmomentübertragungseinrichtung weist vorzugsweise zumindest eine gehäusefeste Gegendruckplatte, zumindest eine drehfest zum Gehäuse und bezüglich der Gegendruckplatte in axialer Richtung der Kupplungsvorrichtung begrenzt verlagerbare Anpressplatte und zumindest eine Kupplungsscheibe mit zumindest einem Reibbelag auf, der zwischen der Anpressplatte und der Gegendruckplatte zur Übertragung eines Drehmoments reibschlüssig klemmbar ist. Vorzugsweise ist die stufenlose Freilaufeinheit ausgebildet, ein drehrichtungsabhängiges Drehmoment kraftschlüssig, vorzugsweise reibschlüssig, auf die Spindelwelle zu übertragen.

Erfindungsgemäß ist eine Sensiereinrichtung ausgebildet, einen Verschleißzustand der Drehmomentübertragungseinrichtung beim Einrücken der Drehmomentübertragungseinrichtung in Abhängigkeit von einem Abstand zu einem gehäusefesten Bauteil der Kupplungsvorrichtung, vorzugsweise einer Gegendruckplatte der Drehmomentübertragungseinrichtung, zu sensieren. Die stufenlose Freilaufeinheit ist durch die Sensiereinrichtung beim Ausrücken der Drehmomentübertragungseinrichtung zur Verschleißnachstellung durch Drehung der Spindelwelle antreibbar.
Insbesondere wird die vorgenannte Aufgabe in vorteilhafter Weise durch eine Kupplungsvorrichtung mit einer mit einem Gehäuse drehfest verbundenen Gegendruckplatte und einer mittels Blattfedern gegenüber dieser drehfest und axial verlagerbar aufgenommenen und von einem Hebelelement unter Einspannung von Reibbelägen auf einen voreingestellten Betriebspunkt vorgespannten Anpressplatte sowie einer Verschleißnachstelleinrichtung zur Nachführung eines sich ändernden Betriebspunkts mittels eines mittels in Umfangsrichtung und über den Umfang verteilten Rampen auf komplementären Gegenrampen der Anpressplatte, zwischen Anpressplatte und Hebelelement aufgenommenen Rampenrings, welcher abhängig von einer Änderung des Betriebspunkts von einem an der Anpressplatte aufgenommenen, aus einer Spindelwelle und einer auf dieser aufgenommenen und bei Verdrehung dieser axial verlagerbaren Spindelmutter gebildeten Spindeltrieb drehangetrieben wird, sowie einer eine Änderung des Betriebspunkts erfassende, den Spindeltrieb abhängig von einem Abstand zu einem gehäusefesten Bauteil steuernde Sensiereinrichtung gelöst, wobei auf der Spindelwelle zumindest eine abhängig von der Lage des Betriebspunkts mit der Spindelwelle in Reibschluss tretende, stufenlose Freilaufeinheit zur Nachführung des Betriebspunkts vorgesehen ist. Das Hebelelement ist vorzugsweise als Tellerfeder ausgebildet, kann aber auch als Hebelfeder ausgebildet sein.

Es ist von Vorteil, wenn die Schlingfeder der stufenlosen Freilaufeinheit die Spindelwelle unter Eigenvorspannung umschlingt und ausgebildet ist, abhängig von der Lage eines im Verschleißzustand veränderten Betriebspunkts der Drehmomentübertragungseinrichtung, mit der Spindelwelle zur Verschleißnachstellung durch Verdrehung des Rampenrings relativ zu komplementären Gegenrampen in Kraftschluss, vorzugsweise in Reibschluss, zu treten. Insbesondere ist die Schlingfeder vorzugsweise einteilig ausgebildet.
Vorzugsweise weist die stufenlose Freilaufeinheit eine auf der Spindelwelle an ihren Federenden verspannbare, abhängig von der Lage des Betriebspunkts mit der Spindelwelle in Reibschluss tretende und bezüglich ihrer Vorspannung gegenüber der Spindelwelle der Verdrehung des Rampenrings nachgeführte Schlingfeder auf. Vorzugsweise sind die Federenden der Schlingfeder anpressplattenseitig und sensiereinrichtungsseitig verspannbar, wenn der Spindeltrieb anpressplattenseitig gelagert ist. Wenn der Spindeltrieb kupplungsdeckelseitig gelagert ist, sind die Federenden der Schlingfeder vorzugsweise kupplungsdeckelseitig und sensiereinrichtungsseitig verspannbar.
In beiden Fällen wird die Schlingfeder als steuerbarer Freilauf eingesetzt, der nach Ansteuerung durch die Sensiereinrichtung in eine Drehrichtung der Spindelwelle Moment überträgt. Hierzu wird die Schlingfeder infolge Eytelweinscher Seilreibung schaltbar und reibschlüssig mit der Spindelwelle verbunden, indem die Federenden der Schlingfedern entsprechend beaufschlagt werden. Hierbei ist ein Federende anpressplattenseitig, also an einem während eines Betätigungsvorgangs axial verlagerten Bauteil, beispielsweise an der Anpressplatte, dem Rampenring, des Hebelelements bzw. der Tellerfeder oder einem mit diesen verbundenen Bauteil axial abgestützt. Das andere Federende der Schlingfeder ist sensiereinrichtungsseitig, also direkt an der Sensiereinrichtung oder einem mit dieser verbundenen Bauteil abgestützt. Gleiches gilt für den Betätigungshebel eines Hülsenfreilaufs.
Weiterhin ist es ebenso von Vorteil, wenn der Hülsenfreilauf der stufenlosen Freilaufeinheit auf der Spindelwelle angeordnet ist und ausgebildet ist, abhängig von der Lage eines im Verschleißzustand veränderten Betriebspunkts der Drehmomentübertragungseinrichtung, mit der Spindelwelle zur Verschleißnachstellung durch Verdrehung des Rampenrings relativ zu komplementären Gegenrampen in Kraftschluss, vorzugsweise in Reibschluss, zu treten.

Die Sensiereinrichtung weist erfindungsgemäß einen, vorzugsweise an einer Anpressplatte der Drehmomentübertragungseinrichtung angeordneten, Finger auf, der ein Federende der Schlingfeder oder einen Betätigungshebel des Hülsenfreilaufs entgegen der Wirkung eines Energiespeichers, der vorzugsweise als Schraubenfeder oder als Blattfeder ausgebildet ist, beaufschlagt.

Die Sensiereinrichtung erfasst einen Finger oder Stift, der Abweichungen des Betriebspunkts erfasst, in dem dieser bei geschlossener Drehmomentübertragungseinrichtung die Position der Anpressplatte gegenüber der Gegendruckplatte oder dieser axial fest zugeordneter Bauteile wie beispielsweise des Gehäuses erfasst. Hierbei kann der Finger oder Stift anpressplattenseitig angeordnet sein und die Abweichung des Betriebspunkts zur Gegendruckplatte sensieren oder an der Gegendruckplatte beziehungsweise am Gehäuse angeordnet sein und die Abweichung des Betriebspunkts gegenüber der Anpressplatte sensieren. Da die Verdrehung des zwischen Anpressplatte und der Tellerfeder angeordneten Rampenrings infolge der bei geschlossener Drehmomentübertragungseinrichtung von der Tellerfeder auf die Anpressplatte aufgebrachten Anpresskraft nicht möglich ist, wird der zur Korrektur eines verlagerten Betriebspunkts notwendige Verdrehwinkel in Form eines vorgespannten Zustands der Sensiereinrichtung zwischengespeichert und während des nachfolgenden Öffnungsvorgangs, bei dem der Rampenring entlastet ist in einen Verdrehwinkel des Rampenwinkels unter Abbau der Vorspannung zumindest teilweise umgesetzt. In nachfolgenden Schließ- und Öffnungsbetätigungen der Kupplungsvorrichtung kann dabei ein zuvor nicht endgültig korrigierter Betriebspunkt laufend weiter korrigiert werden.

Gemäß einem vorteilhaften Ausführungsbeispiel kann die Sensiereinrichtung aus einem an der Anpressplatte entgegen der Wirkung eines Energiespeichers verlagerbar angeordneten, ein Federende der Schlingfeder beaufschlagenden Finger gebildet sein. Hierbei bleibt die Schlingfeder durch die anpressplattenseitige Anlage des einen Endes und des durch den Energiespeicher vorgespannten anderen Endes während der Betätigung der Kupplungsvorrichtung bei korrektem Betriebspunkt auf der Spindelwelle vorgespannt, so dass keine Verdrehung auftritt, vielmehr selbst bei geöffneter Drehmomentübertragungseinrichtung und lastfreiem Rampenring keine versehentliche Verdrehung des Rampenrings durch Blockade der Spindelwelle durch die Schlingfeder auftritt. Stößt der Finger bei sich verlagerndem Betriebspunkt während eines Schließvorgangs der Drehmomentübertragungseinrichtung an einem gehäusefesten Anschlag, beispielsweise an der Gegendruckplatte an, wird die Schlingfeder gegenüber der Spindelwelle entlastet, wobei sich diese gegenüber der Spindelwelle um einen vorgegebenen Betrag verdreht. Beim anschließenden Öffnungsvorgang der Drehmomentübertragungseinrichtung bildet sich durch Beaufschlagung der Schlingfeder der Reibschluss wieder aus und nimmt die Antriebswelle unter Verdrehung der Spindelwelle und damit des Rampenrings mit. Der den Finger in Richtung der Gegendruckplatte vorspannende Energiespeicher kann beispielsweise eine Schraubenfeder sein.

In einem alternativen Ausführungsbeispiel kann die Sensiereinrichtung aus einer am Gehäuse elastisch aufgenommenen, ein Federende der Schlingfeder beaufschlagenden Blattfeder gebildet sein. Hierbei ist die Schlingfeder gegen einen anpressplattenseitigen Anschlag unter Ausbildung eines Reibschlusses mit der Spindelwelle vorgespannt. Wird die Anpressplatte bei Verlagerung des Betriebspunkts in Richtung Gegendruckplatte verlagert, wird die Vorspannung der Schlingfeder durch die bevorzugt am Gehäuse aufgenommene Blattfeder aufgehoben und die Schlingfeder gegen die Spindelwelle verdreht. Beim anschließenden Öffnungsvorgang verdrehen sich Spindelwelle und Schlingfeder gemeinsam unter Beaufschlagung durch die Blattfeder zur Nachstellung des Rampenrings.

Die Verschleißnachstelleinrichtung weist vorzugsweise eine Nachführeinheit zur Nachführung der Vorspannung und/oder der Winkellage der auf der Spindelwelle angeordneten stufenlosen Freilaufeinheit auf.

Insbesondere ist es von Vorteil, wenn die Nachführeinheit keilförmig ausgebildet ist, und in Querrichtung der Kupplungsvorrichtung oder in Umfangsrichtung der Kupplungsvorrichtung verlagerbar ist.

Hierbei ist es von Vorteil, wenn die Nachführeinheit am Rampenring oder an einer Spindelmutter des Spindeltriebs befestigt ist oder einteilig mit dem Rampenring oder der Spindelmutter ausgebildet ist.

Vorzugsweise befindet sich ein Federende der Schlingfeder oder ein Betätigungshebel des Hülsenfreilaufs mit einer Auflagefläche der Nachführeinheit in gleitbeweglicher Anlage befindet.

Gemäß einem bevorzugten Ausführungsbeispiel ist das Federende der Schlingfeder oder der Betätigungshebel des Hülsenfreilaufs, das/der sich mit der Auflagefläche der Nachführeinheit in gleitbeweglicher Anlage befindet, das gleiche Federende oder der gleiche Betätigungshebel ist, das/der durch den Finger beaufschlagbar ist. Insbesondere bei Schlingfedern ist es nicht erforderlich, dass sich das zweite, fingerferne Federende an einem Bauteil abstützt. Jedoch kann zu Nachführung der Schlingfedervorspannung und/oder der Winkellage der Schlingfeder sich dieses zweite, fingerferne Federende an einer Nachführeinheit, vorzugsweise am Rampenring oder einem damit drehfest verbundenen Bauteil abstützen.

Zum Ausgleich einer sich während der Abfolge der über Lebensdauer der Kupplungsvorrichtung stattfindenden Nachstellvorgänge laufend verdrehenden Schlingfeder werden entsprechende Anschläge zumindest eines Federendes der Schlingfeder nachgeführt. Beispielsweise erfolgt die Nachführung der Vorspannung der auf der Spindelwelle angeordneten Schlingfeder mittels eines, eine Auflagefläche für ein Federende der Schlingfeder bildenden, mit in Drehrichtung des Rampenrings zunehmender Steigung ausgebildeten Bauteils wie Blech. Hierbei wird das sensiereinrichtungsseitig beaufschlagte Federende mittels der Auflagefläche wegbegrenzt. Alternativ kann das anpressplattenseitige Federende der Schlingfeder an der Auflagefläche anliegen.

Die Erfindung wird anhand der in den Figuren 1 bis 9 dargestellten Ausführungsbeispiele näher erläutert. Dabei zeigen:
- Figur 1: ein erstes Ausführungsbeispiel einer Kupplungsvorrichtung mit stufenloser Verschleißnachstelleinrichtung,
- Figur 2: eine detaillierte Ansicht der Verschleißnachstelleinrichtung der Kupplungsvorrichtung der Figur 1,
- Figur 3: einen Schnitt durch die Kupplungsvorrichtung der Figur 1,
- Figur 4: ein Detail der Figur 3,
- Figur 5: einen Schnitt durch ein zweites Ausführungsbeispiel einer Kupplungsvorrichtung mit einer geänderten Verschleißnachstelleinrichtung,
- Figur 6: ein Detail der Figur 5,
- Figur 7: eine Detail eines dritten Ausführungsbeispiels einer Kupplungsvorrichtung mit einer geänderten Verschleißnachstelleinrichtung,
- Figur 8: die Kupplungsvorrichtung der Figur 7 im Schnitt, und
- Figur 9: ein Detail der Figur 8.

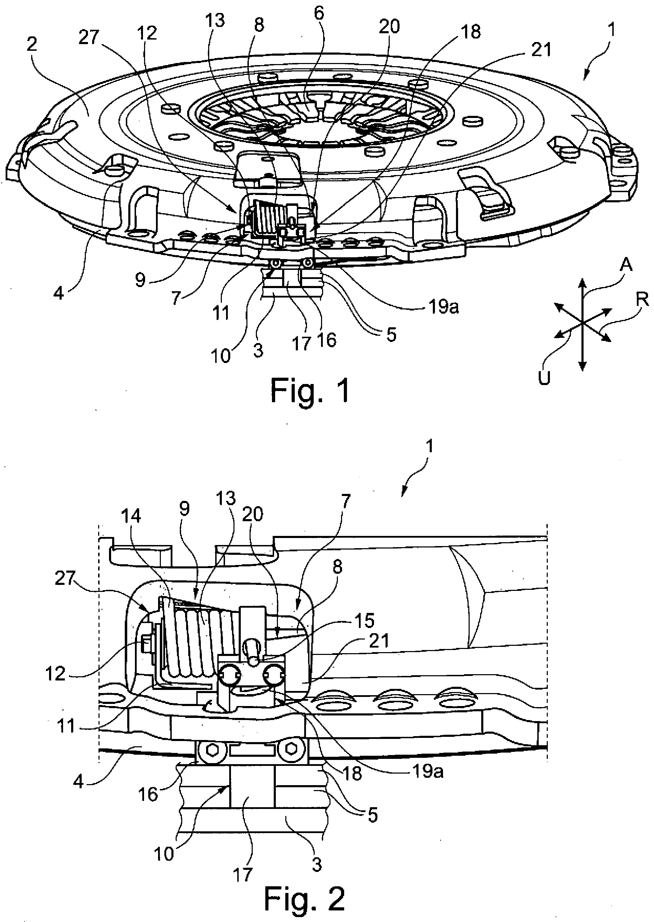

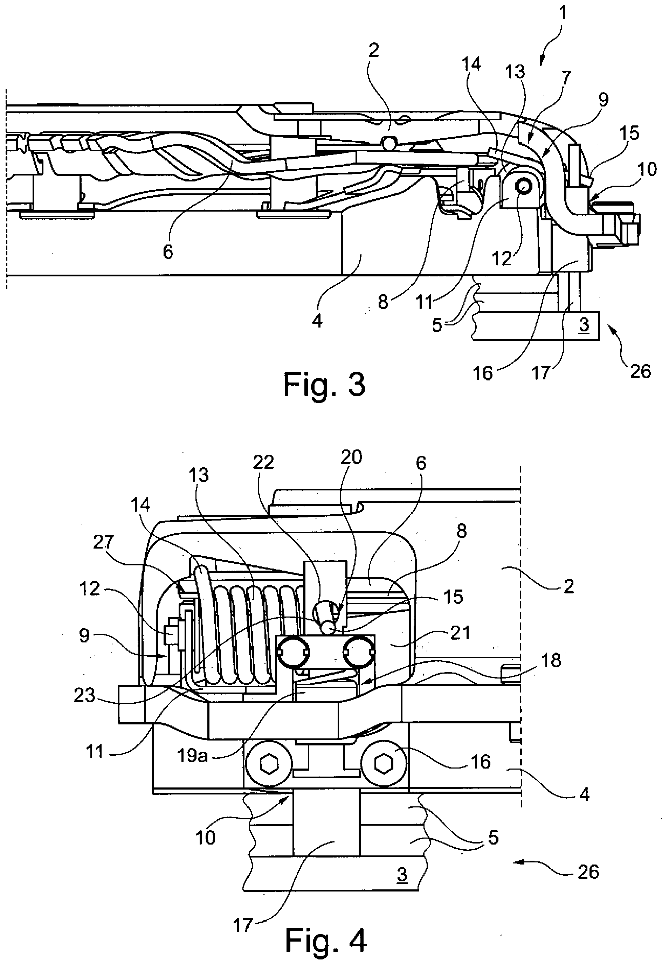

Die Figuren 1 bis 4 zeigen in unterschiedlicher Darstellung eines ersten Ausführungsbeispiels einer Kupplungsvorrichtung 1 mit einer nur ausschnittsweise dargestellten, mit einem Gehäuse 2 verbundenen Gegendruckplatte 3, einer mittels nicht dargestellter Blattfedern in axialer Richtung A verlagerbaren und drehfest mit dem Gehäuse 2 verbundenen Anpressplatte 4 und einem sich am Gehäuse 2 abstützenden, die Anpressplatte 4 in axialer Richtung A gegen die Gegendruckplatte 3 unter Verspannung von Reibbelägen 5 verspannenden Hebelelement 6. Vorzugsweise ist das Hebelelement 6 als Tellerfeder ausgebildet.

Die gehäusefeste Gegendruckplatte 3, die drehfest zum Gehäuse und bezüglich der Gegendruckplatte 3 in axialer Richtung A der Kupplungsvorrichtung 1 begrenzt verlagerbare Anpressplatte 4 und die Kupplungsscheibe mit zumindest einem Reibbelag 5, der zwischen der Anpressplatte 4 und der Gegendruckplatte 3 zur Übertragung eines Drehmoments reibschlüssig klemmbar ist, bilden vorzugsweise eine Drehmomentübertragungseinrichtung 26 der Kupplungsvorrichtung 1.

Zum Öffnen der Kupplungsvorrichtung 1 bzw. der Drehmomentübertragungseinrichtung 26 wird das Hebelelement 6 bzw. die Tellerfeder in Radialer Richtung R innen mittels eines Ausrücksystems axial in Richtung Gegendruckplatte 3 beaufschlagt, so dass die Anpressplatte 4 infolge der Unterstützung der vorgespannten Blattfedern von den Reibbelägen 5 der nicht näher dargestellten Kupplungsscheibe abhebt.

Bei einer Verminderung der Stärke der Reibbeläge 5 infolge Reibbelagsverschleiß verlagert sich ein an der Reibfläche der Anpressplatte 4 gegenüber den Reibbelägen 5 gedachter Betriebspunkt der Kupplungsvorrichtung 1 im geschlossenen Zustand dieser in Richtung Gegendruckplatte 3. Infolgedessen stellt sich das Hebelelement 6 radial innen auf, so dass das Anpressverhalten und die Ausrückwege geändert werden. Um bei Reibbelagsverschleiß den vorhergehenden Zustand wieder herzustellen, ist in der Kupplungsvorrichtung 1 eine stufenlos selbstnachstellende Verschleißnachstelleinrichtung 7 vorgesehen, die aus einem zwischen dem Hebelelement 6 und der Anpressplatte 4 angeordneten, in Umfangsrichtung U ansteigende, über den Umfang verteilte, an komplementären Gegenrampen der Anpressplatte 4 anliegenden Rampen aufweisenden Rampenring 8, einem diesen im Nachstellfall antreibenden Spindeltrieb 9 und einer Sensiereinrichtung 10 gebildet ist.

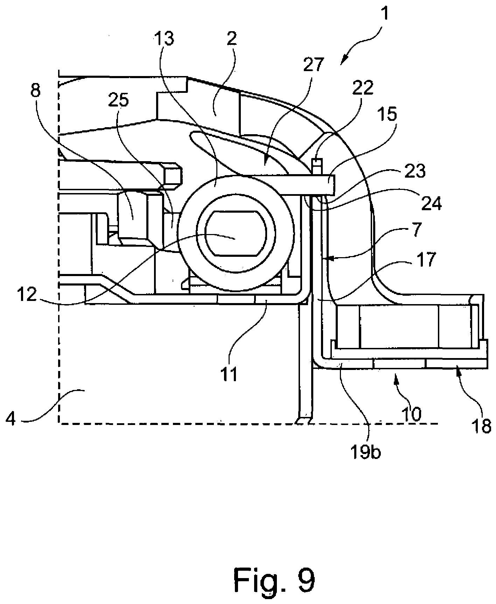

Der Spindeltrieb 9 ist mittels eines Halters 11, welcher eine Spindelwelle 12 verdrehbar aufnimmt, fest mit der Anpressplatte 4 verbunden. Auf der Spindelwelle 12 ist bei Verdrehung dieser eine sich verlagernde, nur in Figur 9 dargestellte Spindelmutter 25 angeordnet, welche formschlüssig in den Rampenring 8 eingreift und bei Verdrehung der Spindelwelle 12 den Rampenring 8 entsprechend der gewählten, vorzugsweise selbsthemmenden Übersetzung des Spindeltriebs um einen vorgegebenen Drehwinkel verdreht.

Zum Antrieb der Spindelwelle 12 ist auf der Spindelwelle 12 eine stufenlose Freilaufeinheit 27 angeordnet. Vorzugsweise weist die stufenlose Freilaufeinheit 27 eine Schlingfeder 13 auf oder ist als Schlingfeder 13 ausgebildet. In einem nicht dargestellten Ausführungsbeispiel weist die stufenlose Freilaufeinheit 27 jedoch einen Hülsenfreilauf auf bzw. ist als Hülsenfreilauf ausgebildet.

Auf dem Außendurchmesser der Spindelwelle 12 ist die Schlingfeder 13 mit geringerem Innendurchmesser unter Spannung als Schlingfeder aufgenommen, welche je nach Ansteuerung derer Federenden 14, 15 die Spindelwelle 12 in Form eines Freilaufs in eine Drehrichtung freigibt und in die andere blockiert.

Die Sensiereinrichtung 10 enthält im ersten Ausführungsbeispiel einen an der Anpressplatte 4 fest aufgenommenen Halter 16 und einen Finger 17, welcher vom Halter 16 mittels der Wirkung eines Energiespeichers 18 - hier einer Schraubenfeder 19a - in axialer Richtung A begrenzt in Richtung Gegendruckplatte 3 verlagerbar aufgenommen ist.

Das hebelelementseitige Federende 14 der Schlingfeder kann am Hebelelement 6 anpressplattenseitig angelegt sein, kann jedoch auch frei auslaufend auf der Spindelwelle 12 vorgesehen sein, d.h. ohne unmittelbare, anpressplattenseitige Abstützung vorgesehen sein. Das andere, fingerseitige Federende 15 wird abhängig vom Reibbelagsverschleiß der Reibbeläge 5 und damit abhängig vom Betriebspunkt von der Sensiereinrichtung 10 beaufschlagt. Gleiches gilt bei einem Hülsenfreilauf für einen fingerseitigen Betätigungshebel der Hülsenfreilaufs und ggf. einen (weiteren) hebelelementseitigen Betätigungshebel.

Die Verschleißnachstelleinrichtung 7 weist vorzugsweise eine Nachführeinheit 21 zur Nachführung der Vorspannung und/oder der Winkellage der auf der Spindelwelle angeordneten stufenlosen Freilaufeinheit 27, insbesondere der Schlingfeder 13, auf. Die Nachführeinheit 21 ist keilförmig ausgebildet, und in Querrichtung der Kupplungsvorrichtung 1 verlagerbar. Hierbei ist es von Vorteil, wenn die Nachführeinheit 21 an der Spindelmutter 25 des Spindeltriebs 9 befestigt ist oder einteilig mit der Spindelmutter 25 ausgebildet ist.

Um eine übermäßige Verschleißnachstellung zu verhindern, d.h. eine korrekte Nachführung zu ermöglichen, befindet sich im dargestellten Ausführungsbeispiel das fingerseitige Federende 15 der Schlingfeder 13 mit einer Auflagefläche 20 der Nachführeinheit 21 in gleitbeweglicher Anlage. Gleiches gilt für einen fingerseitigen Betätigungshebel eines nicht dargestellten Hülsenfreilaufs.

Aus der Anordnung der Verschleißnachstelleinrichtung 7 in der Kupplungsvorrichtung 1 ergibt sich folgende Funktionsweise:

Bei nicht verlagertem Betriebspunkt und geschlossener Kupplungsvorrichtung 1 bzw. Drehmomentübertragungsvorrichtung 26 kommt der Finger 17 höchstenfalls in Berührung mit der Gegendruckplatte 3, wird aber nicht verlagert bzw. wird nur soweit verlagert, dass sein mit dem Federende 15 in Eingriff stehender Eingriffsabschnitt, beispielsweise eine Durchbrechung im Finger 17, nicht über die Auflagefläche 20 der Nachführeinheit 21 verlagert wird. Durch die axiale Höhe der fingerseitigen Durchbrechung, in der das Federende 15 aufgenommen ist, d.h. durch das Spiel zwischen Anschlägen 22, 23 kann die Ausbildung des Reibschlusses der Schlingfeder 13 zur Spindelwelle 12 gesteuert bzw. eingestellt werden.

Bei einem Öffnen der Drehmomentübertragungsvorrichtung 26 wird die Anpressplatte 4 axial von der Gegendruckplatte 3weg verlagert und der Finger 17 hebt von der Gegendruckplatte 3 ab. Dabei bleibt die Schlingfeder 13 gegenüber der Spindelwelle 12 reibschlüssig verbunden, so dass eine beispielsweise infolge von Schwingungen der Anpressplatte 4 unerwünschte Nachstellung des Rampenrings 8 unterbleibt. Es kommt zu keiner Bewegung der Schlingfeder 13, das das Federende 15 zur Gegendruckplatte 3 hin auf der Anlagefläche 20 der Nachführeinheit 21 aufliegt.

Vermindert sich die Reibbelagstärke der Reibbeläge 5 infolge von Verschleiß, verlagert sich die Anpressplatte 4 und damit der Betriebspunkt der Kupplungsvorrichtung 1 in Richtung Gegendruckplatte 3, so dass der Finger 17 auf dieser während des Schließens oder bei geschlossener Drehmomentübertragungseinrichtung 26 aufsetzt und axial entgegen der Wirkung der Schraubenfeder 19a verlagert wird. Hierdurch wird das Federende 15 der Schlingfeder 13 angehoben und der Reibschluss dieser mit der Spindelwelle 12 durch Aufweitung der Windungen dieser gelöst, wobei sich die Schlingfeder 13 aufbiegt. Die Aufbiegung der Schlingfeder 13 kann einerseits dadurch erfolgen, dass der Rampenring 8 durch das Hebelelement 6 geklemmt ist, wodurch die Abstützung über den blockierten, durch die die Spindelmutter 25 am Rampenring 8 angebundenen Spindeltrieb 9 erfolgt. Andererseits kann sich das Federende 14 aber auch unmittelbar am Hebelelement 6 abstützen, wodurch die Aufbiegung der Schlingfeder 13 zumindest begünstigt werden kann.

Bei ausreichender Verlagerung des Betriebspunkts wird weiterhin die Schlingfeder 13 gegenüber der Spindelwelle 12 zumindest teilweise verdreht. Der Rampenring 8 wird hierbei vor ungewollter Verdrehung durch die anliegende Anpresskraft des Hebelelements 6 bei geschlossener Kupplungsvorrichtung 1 geschützt.

Wird nachfolgend die Kupplungsvorrichtung 1 geöffnet, wird die Anlage des Fingers 17 an der Gegendruckplatte 3 aufgehoben und der Finger 17 durch die Schraubenfeder 19a rückverlagert, so dass dessen Vorspannung auf das Federende 15 der Schlingfeder 13 aufgehoben wird und diese wieder den Reibschluss mit der Spindelwelle 12 ausbildet. Weiterhin verdreht die Schlingfeder 13 die Spindelwelle 12 und damit den in offenem Zustand der Kupplungsvorrichtung 1 entlasteten Rampenring 8 nach Ausbildung des Reibschlusses bis das Federende 15 in seinem Weg durch die Auflagefläche 20 begrenzt wird.

Die Auflagefläche 20 wird durch die Nachführeinheit 21 bereitgestellt, welche im dargestellten Ausführungsbeispiel fest mit der Spindelmutter 25 verbunden oder einteilig an dieser ausgebildet ist. Durch die in Drehrichtung des Rampenrings 8 zunehmende Höhe der Auflagefläche 20 wird die mit der Anzahl der Nachstellungen zunehmende Verdrehung der Schlingfeder 13 und die durch die sich der Anpressplatte 4 mit zunehmendem Verschleiß über Lebensdauer annähernde Gegendruckplatte 3 zunehmende Verlagerung des Fingers 17 ermöglicht, so dass dieser über Lebensdauer denselben Verlagerungsabstand des Betriebspunkts sensiert.

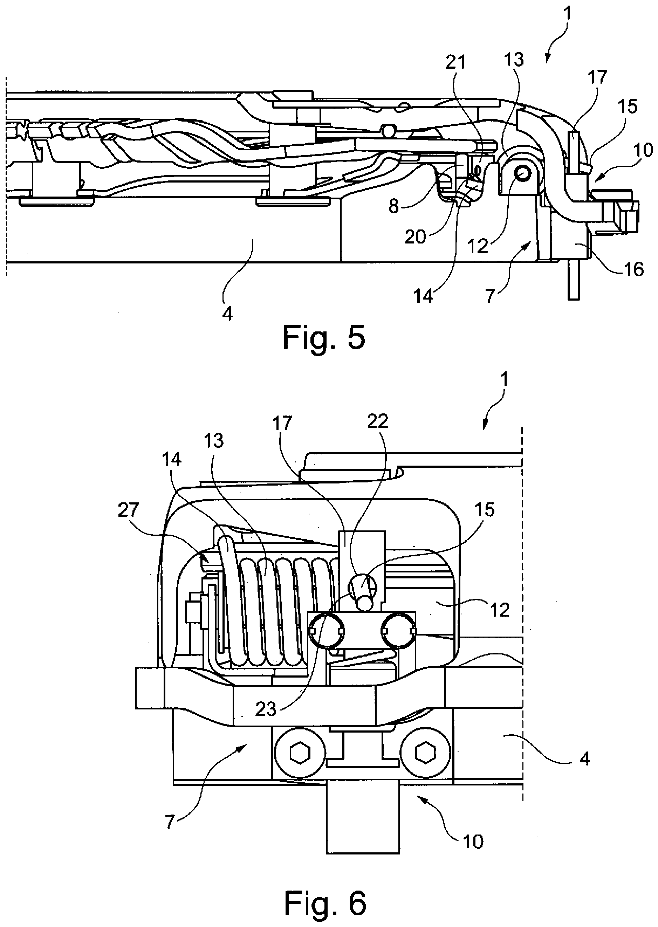

Im Unterschied zu dem in den Figuren 1 bis 4 dargestellten ersten Ausführungsbeispiel weist das in den Figuren 5 und 6 dargestellte zweite Ausführungsbeispiel der Kupplungsvorrichtung 1 eine geänderte Verschleißnachstelleinrichtung 7 auf, bei der die Federenden 14, 15 der Schlingfeder 13 sowie die Nachführeinheit 21 zur Nachführung der Verdrehposition der Schlingfeder 13 geändert sind. Insbesondere ist die Nachführeinheit 21 am Rampenring 8 befestigt ist oder einteilig mit dem Rampenring 8 ausgebildet. Somit ist die Nachführeinheit 21 in Umfangsrichtung U der Kupplungsvorrichtung 1, vorzugsweise drehfest mit dem Rampenring 8, verlagerbar.

Die Schlingfeder 13 weist hierzu bezüglich der Drehachse dieser und der Spindelwelle 12 gegeneinander versetzte Federenden 14, 15 auf, so dass sich das anpressplattenseitige, im dargestellten Ausführungsbeispiel in radialer Richtung R weiter innenliegende Federnde 14 an der rampenringseitigen Auflagefläche 20 der Nachführeinheit 21 zur Nachführung der Vorspannung und/oder der Winkellage der Schlingfeder 13 gleitbeweglich abstützen kann.

Die Funktion der Sensiereinrichtung 10 im Zusammenspiel mit dem Federende 15 entspricht im Wesentlichen der Verschleißnachstelleinrichtung 7 der Figuren 1 bis 4.

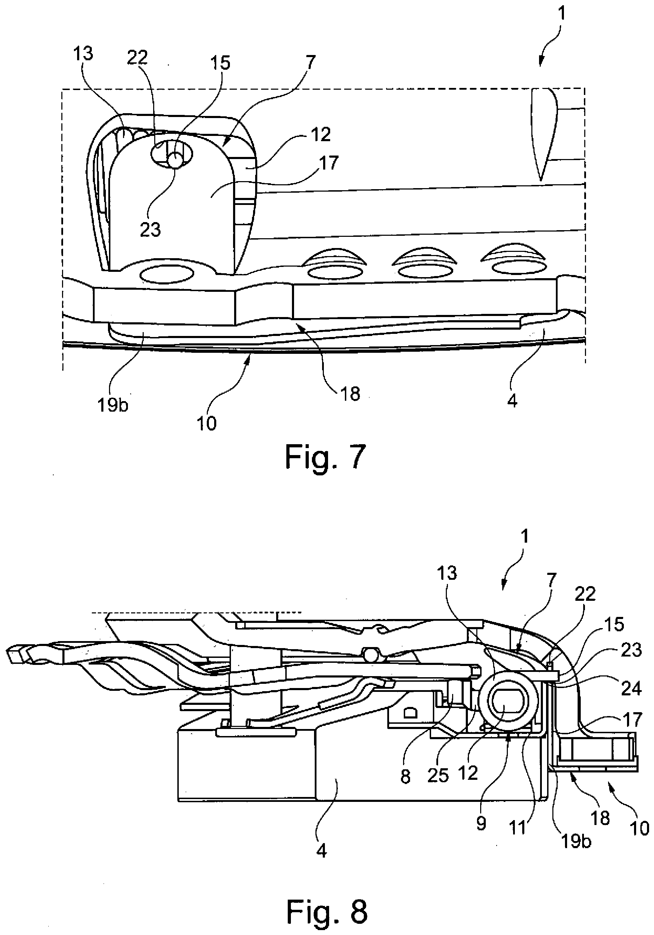

Die Figuren 7 bis 9 zeigen drittes Ausführungsbeispiel der Kupplungsvorrichtung 1 mit geänderter Verschleißnachstelleinrichtung 7. Im Unterschied zu den Verschleißnachstelleinrichtungen der vorhergehenden Figuren ist die Sensiereinrichtung 10 im dritten Ausführungsbeispiel am Gehäuse 2 in Form einer gegenüber dem Gehäuse 2 elastisch verformbaren Blattfeder 19b ausgebildet. Die Blattfeder 19b beaufschlagt mit ihrem Finger 17, der vorzugsweise einteilig mit der Blattfeder 19b ausgebildet ist, das Federende 15 der Schlingfeder 13 und steuert somit die Schlingwirkung der Schlingfeder 13. Das fingerseitige Federende 15 wird dabei durch den aus dem Halter 11 gebildeten Anschlag 24 abgestützt.

Daraus ergibt sich eine Sensierung eines Verschleißwegs der Anpressplatte 4 gegenüber dem mit der nicht dargestellten Gegendruckplatte fest verbundenen Gehäuse 2 wie folgt:

Während einer Öffnungsbewegung der hier im geschlossenen Zustand dargestellten Drehmomentübertragungseinrichtung 26 verlagert sich die Anpressplatte 4 axial in Richtung des Gehäuses 2 zwischen den Anschlägen 22, 23 des Fingers 17. Durch die reibschlüssige Verbindung der Schlingfeder 13 zur Spindelwelle 12 ist diese im geöffneten Zustand an einer ungewollten Verdrehung gehindert.

Verlagert sich die Anpressplatte 4 und deren Betriebspunkt infolge Reibbelagsverschleiß im schließenden oder geschlossenen Zustand der Drehmomentübertragungseinrichtung 26 weg vom Gehäuse 2, wird das Federende 15 durch den Anschlag 23 verlagert und damit die Schlingwirkung der Schlingfeder 13 gegenüber der Spindelwelle 12 aufgehoben sowie die Schlingfeder 13 gegenüber der Spindelwelle verdreht.

Im anschließenden Öffnungsvorgang der Drehmomentübertragungseinrichtung 26 wird die Anpressplatte 4 in Richtung Gehäuse 2 verlagert, wobei das Federende 15 der Schlingfeder 13 vom Anschlag 23 entlastet und der Reibschluss zur Spindelwelle 12 wieder aufgebaut wird. Im Weiteren beaufschlagt der Anschlag 22 das Federende 15 und verdreht die Schlingfeder 13 samt Spindelwelle 12, so dass die auf dieser verlagerte, in den Rampenring 8 eingreifende Spindelmutter 25 den Rampenring 8 verdreht.

Es versteht sich, dass die Nachstelleinrichtungen 7 der Figuren 1 bis 9 so ausgelegt sein können, dass zuerst ein geringerer Betrag als der Verschleißabstand des verlagerten zum korrekten Betriebspunkt nachgestellt und in anschließenden Nachstellzyklen sukzessive bis zum korrekten Betriebspunkt nachgestellt wird. Auch versteht es sich, dass wie im ersten Ausführungsbeispiel auch im zweiten und dritten Ausführungsbeispiel anstelle der Schlingfeder 13 ein Hülsenfreilauf als stufenlose Freilaufeinheit 27 vorgesehen werden kann.

In Summe betreffen die vorangegangenen Ausführungsbeispiele eine Kupplungsvorrichtung 1 mit zumindest einer in axialer Richtung A durch ein Hebelelement 6 ein- und/oder ausrückbaren, im eingerückten Zustand reibschlüssigen Drehmomentübertragungseinrichtung 26 und zumindest einer Verschleißnachstelleinrichtung 7, die zumindest einen drehbaren und durch das Hebelelement 6 zumindest zeitweise klemmbaren Rampenring 8 und zumindest einen auf den Rampenring 8 wirkenden, drehbar gelagerten Spindeltrieb 9 mit einer Spindelwelle 12 aufweist, wobei die Verschleißnachstelleinrichtung 7 zumindest eine stufenlose Freilaufeinheit 27 zur Drehung der Spindelwelle 12 bei einem sensierten Verschleißzustand der Drehmomentübertragungseinrichtung 26 aufweist. Vorzugsweise weist die stufenlose Freilaufeinheit 27 zumindest eine Schlingfeder 13 oder zumindest einen Hülsenfreilauf auf.

### Bezuaszeichenliste

- 1: Kupplungsvorrichtung
- 2: Gehäuse
- 3: Gegendruckplatte
- 4: Anpressplatte
- 5: Reibbelag
- 6: Hebelelement
- 7: Verschleißnachstelleinrichtung
- 8: Rampenring
- 9: Spindeltrieb
- 10: Sensiereinrichtung
- 11: Halter
- 12: Spindelwelle
- 13: Schlingfeder
- 14: Federende
- 15: Federende
- 16: Halter
- 17: Finger
- 18: Energiespeicher
- 19a: Schraubenfeder
- 19b: Blattfeder
- 20: Auflagefläche
- 21: Nachführeinheit
- 22: Anschlag
- 23: Anschlag
- 24: Anschlag
- 25: Spindelmutter
- 26: Drehmomeniübertragungseinrichtung
- 27: stufenlose Freilaufeinheit
- A: axiale Richtung
- R: radiale Richtung
- U: Umfangsrichtung

## Patentansprüche

1. Kupplungsvorrichtung (1) mit zumindest einer in axialer Richtung (A) durch ein Hebelelement (6) ein- und/oder ausrückbaren, im eingerückten Zustand reibschlüssigen Drehmomentübertragungseinrichtung (26) und zumindest einer Verschleißnachstelleinrichtung (7), die zumindest einen drehbaren und durch das Hebelelement (6) zumindest zeitweise klemmbaren Rampenring (8) und zumindest einen auf den Rampenring (8) wirkenden, drehbar gelagerten Spindeltrieb (9) mit einer Spindelwelle (12) aufweist, wobei eine Sensiereinrichtung (10) ausgebildet ist, einen Verschleißzustand der Drehmomentübertragungseinrichtung (26) beim Einrücken der Drehmomentübertragungseinrichtung (26) in Abhängigkeit von einem Abstand zu einem gehäusefesten Bauteil der Kupplungsvorrichtung (1) zu sensieren, wobei die Verschleißnachstelleinrichtung (7) zumindest eine stufenlose, zumindest eine Schlingfeder (13) oder zumindest einen Hülsenfreilauf aufweisende Freilaufeinheit (27) zur Drehung der Spindelwelle (12) bei einem sensierten Verschleißzustand der Drehmomentübertragungseinrichtung (26) aufweist, und die stufenlose Freilaufeinheit (27) durch die Sensiereinrichtung (10) beim Ausrücken der Drehmomentübertragungseinrichtung (26) zur Verschleißnachstellung durch Drehung der Spindelwelle (12) antreibbar ist, **dadurch gekennzeichnet, dass** die Sensiereinrichtung (10) einen Finger (17) aufweist, der ein Federende (15) der Schlingfeder (13) oder einen Betätigungshebel des Hülsenfreilaufs entgegen der Wirkung eines Energiespeichers (18) beaufschlagt.

2. Kupplungsvorrichtung (1) nach Anspruch 1, wobei das gehäusefeste Bauteil der Kupplungsvorrichtung (1) als Gegendruckplatte (3) der Drehmomentübertragungseinrichtung (26) ausgebildet ist.

3. Kupplungsvorrichtung (1) nach Anspruch 1 oder 2, wobei die Schlingfeder (13) der stufenlosen Freilaufeinheit (27) die Spindelwelle (12) unter Eigenvorspannung umschlingt und ausgebildet ist, abhängig von der Lage eines im Verschleißzustand veränderten Betriebspunkts der Drehmomentübertragungseinrichtung (26), mit der Spindelwelle (12) zur Verschleißnachstellung durch Verdrehung des Rampenrings (8) relativ zu komplementären Gegenrampen in Kraftschluss, vorzugsweise in Reibschluss, zu treten.

4. Kupplungsvorrichtung (1) nach Anspruch 1 oder 2, wobei der Hülsenfreilauf der stufenlosen Freilaufeinheit (27) auf der Spindelwelle (12) angeordnet ist und ausgebildet ist, abhängig von der Lage eines im Verschleißzustand veränderten Betriebspunkts der Drehmomentübertragungseinrichtung (26), mit der Spindelwelle (12) zur Verschleißnachstellung durch Verdrehung des Rampenrings (8) relativ zu komplementären Gegenrampen in Kraftschluss, vorzugsweise in Reibschluss, zu treten.

5. Kupplungsvorrichtung (1) nach zumindest eine der Anspruch 1 bis 4, wobei der Finger (17) an einer Anpressplatte (4) der Drehmomentübertragungseinrichtung (26) angeordnet ist, und/oder der Energiespeicher (18) als Schraubenfeder (19a) oder als Blattfeder (19b) ausgebildet ist.

6. Kupplungsvorrichtung (1) nach zumindest einem der Ansprüche 1 bis 5, wobei die Verschleißnachstelleinrichtung (7) eine Nachführeinheit (21) zur Nachführung der Vorspannung und/oder der Winkellage der auf der Spindelwelle (12) angeordneten stufenlosen Freilaufeinheit (27) aufweist.

7. Kupplungsvorrichtung (1) nach Anspruch 6, wobei die Nachführeinheit (21) keilförmig ausgebildet ist, und in Querrichtung der Kupplungsvorrichtung (1) oder in Umfangsrichtung (U) der Kupplungsvorrichtung (1) verlagerbar ist.

8. Kupplungsvorrichtung (1) nach Anspruch 6 oder 7, wobei die Nachführeinheit (21) am Rampenring (8) oder an einer Spindelmutter (25) des Spindeltriebs (9) befestigt ist oder einteilig mit dem Rampenring (8) oder der Spindelmutter (25) ausgebildet ist.

9. Kupplungsvorrichtung (1) nach zumindest einem der Ansprüche 6 bis 8, wobei sich ein Federende (14, 15) der Schlingfeder (13) oder ein Betätigungshebel des Hülsenfreilaufs mit einer Auflagefläche (20) der Nachführeinheit (21) in gleitbeweglicher Anlage befindet.

10. Kupplungsvorrichtung (1) nach Anspruch 9, wobei das Federende (15) der Schlingfeder (13) oder der Betätigungshebel des Hülsenfreilaufs, das/der sich mit der Auflagefläche (20) der Nachführeinheit (21) in gleitbeweglicher Anlage befindet, das gleiche Federende (15) oder der gleiche Betätigungshebel ist, das/der durch den Finger (17) beaufschlagbar ist.

## Claims

1. Clutch apparatus (1) having at least one torque-transmitting device (26) which can be engaged and/or disengaged in an axial direction (A) by way of a lever element (6) and which exhibits frictional engagement in the engaged state, and having at least one wear-compensating readjustment device (7) which has at least one rotatable ramp ring (8), which can be at least temporarily clamped by way of the lever element (6), and at least one rotatably mounted spindle drive (9), which acts on the ramp ring (8) and which has a spindle shaft (12), wherein a sensing device (10) is formed so as to sense a state of wear of the torque-transmitting device (26) during the engagement of the torque-transmitting device (26) in a manner dependent on a distance to a component, which is fixed with respect to a housing, of the clutch apparatus (1), wherein the wear-compensating readjustment device (7) has at least one continuously variable freewheel unit (27) which has at least one wrap spring (13) or at least one sleeve-type freewheel and which serves for rotating the spindle shaft (12) in the case of a state of wear of the torque-transmitting device (26) being sensed, and the continuously variable freewheel unit (27) can, by way of the sensing device (10), during disengagement of the torque-transmitting device (26), be driven for the purposes of wear-compensating readjustment by rotation of the spindle shaft (12), **characterized in that** the sensing device (10) has a finger (17) which acts on a spring end (15) of the wrap spring (13) or on an actuation lever of the sleeve-type freewheel counter to the action of an energy store (18).

2. Clutch apparatus (1) according to Claim 1, wherein that component of the clutch apparatus (1) which is fixed with respect to a housing is in the form of a counterpressure plate (3) of the torque-transmitting device (26).

3. Clutch apparatus (1) according to Claim 1 or 2, wherein the wrap spring (13) of the continuously variable freewheel unit (27) is wrapped around the spindle shaft (12) under inherent preload and is designed such that, in a manner dependent on the position of an operating point, changed in terms of state of wear, of the torque-transmitting device (26), said wrap spring enters into non-positively locking engagement, preferably frictional engagement, with the spindle shaft (12) for the purposes of wear-compensating readjustment by rotation of the ramp ring (8) relative to complementary counterpart ramps.

4. Clutch apparatus (1) according to Claim 1 or 2, wherein the sleeve-type freewheel of the continuously variable freewheel unit (27) is arranged on the spindle shaft (12) and is designed such that, in a manner dependent on the position of an operating point, changed in terms of state of wear, of the torque-transmitting device (26), said sleeve-type freewheel enters into non-positively locking engagement, preferably frictional engagement, with the spindle shaft (12) for the purposes of wear-compensating readjustment by rotation of the ramp ring (8) relative to complementary counterpart ramps.

5. Clutch apparatus (1) according to at least one of Claims 1 to 4, wherein the finger (17) is arranged on a pressure plate (4) of the torque-transmitting device (26), and/or the energy store (18) is in the form of a helical spring (19a) or leaf spring (19b).

6. Clutch apparatus according to at least one of Claims 1 to 5, wherein the wear-compensating readjustment device (7) has a follow-up adjustment unit (21) for the follow-up adjustment of the preload and/or of the angular position of the continuously variable freewheel unit (27) arranged on the spindle shaft (12).

7. Clutch apparatus (1) according to Claim 6, wherein the readjustment unit (21) is of wedge-shaped form and is displaceable in a transverse direction of the clutch apparatus (1) or in a circumferential direction (U) of the clutch apparatus (1).

8. Clutch apparatus (1) according to Claim 6 or 7, wherein the follow-up adjustment unit (21) is fastened to the ramp ring (8) or to a spindle nut (25) of the spindle drive (9) or is formed in one piece with the ramp ring (8) or with the spindle nut (25).

9. Clutch apparatus (1) according to at least one of Claims 6 to 8, wherein a spring end (14, 15) of the wrap spring (13) or an actuation lever of the sleeve-type freewheel is in sliding contact with a support surface (20) of the follow-up adjustment unit (21).

10. Clutch apparatus (1) according to Claim 9, wherein the spring end (15) of the wrap spring (13) or the actuation lever of the sleeve-type freewheel, which spring end or actuation lever is in sliding contact with the support surface (20) of the follow-up adjustment unit (21), is the same spring end (15) or the same actuation lever that can be acted on by the finger (17).

## Revendications

1. Dispositif d'embrayage (1) comprenant au moins un dispositif de transfert de couple (26) à engagement par friction dans l'état embrayé, pouvant être embrayé et/ou débrayé dans la direction axiale (A) par un élément de levier (6), et au moins un dispositif de rattrapage de l'usure (7) qui présente au moins une bague de rampe rotative (8) pouvant être serrée au moins temporairement par l'élément de levier (6) et au moins un entraînement à broche (9) avec un arbre de broche (12), supporté à rotation et agissant sur la bague de rampe (8), un dispositif de détection (10) étant réalisé afin de détecter un état d'usure du dispositif de transfert de couple (26) lors de l'embrayage du dispositif de transfert de couple (26) en fonction d'une distance à un composant fixé au boîtier du dispositif d'embrayage (1), le dispositif de rattrapage de l'usure (7) présentant au moins une unité de roue libre continue (27), présentant au moins un ressort enroulé (13) ou au moins une roue libre pour la rotation de l'arbre de broche (12) lorsqu'un état d'usure du dispositif de transfert de couple (26) est détecté, et l'unité de roue libre continue (27) pouvant être entraînée par le dispositif de détection (10) lors du débrayage du dispositif de transfert de couple (26) pour le rattrapage de l'usure par rotation de l'arbre de broche (12), **caractérisé en ce que** le dispositif de détection (10) présente un doigt (17) qui sollicite une extrémité de ressort (15) du ressort enroulé (13) ou un levier d'actionnement de la roue libre à l'encontre de l'action d'un accumulateur d'énergie (18).

2. Dispositif d'embrayage (1) selon la revendication 1, dans lequel le composant de dispositif d'embrayage (1) fixé au boîtier est réalisé en tant que plaque de contrepression (3) du dispositif de transfert de couple (26).

3. Dispositif d'embrayage (1) selon la revendication 1 ou 2, dans lequel le ressort enroulé (13) de l'unité de roue libre continue (27) entoure l'arbre de broche (12) avec une précontrainte propre et est réalisé de manière à venir en prise par engagement par force, de préférence par engagement par frottement, avec l'arbre de broche (12) en vue du rattrapage de l'usure par rotation de la bague de rampe (8) par rapport à des rampes conjuguées complémentaires, en fonction de la position d'un point de fonctionnement du dispositif de transfert de couple (26) modifié dans l'état d'usure.

4. Dispositif d'embrayage (1) selon la revendication 1 ou 2, dans lequel la roue libre de l'unité de roue libre continue (27) est disposée sur l'arbre de broche (12) et est réalisée de manière à venir en prise par engagement par force, de préférence par engagement par frottement, avec l'arbre de broche (12) en vue du rattrapage de l'usure par rotation de la bague de rampe (8) par rapport à des rampes conjuguées complémentaires, en fonction de la position d'un point de fonctionnement du dispositif de transfert de couple (26) modifié dans l'état d'usure.

5. Dispositif d'embrayage (1) selon au moins l'une quelconque des revendications 1 à 4, dans lequel le doigt (17) est disposé au niveau d'une plaque de pressage (4) du dispositif de transfert de couple (26) et/ou l'accumulateur d'énergie (18) est réalisé sous forme de ressort hélicoïdal (19a) ou sous forme de ressort à lame (19b).

6. Dispositif d'embrayage (1) selon au moins l'une quelconque des revendications 1 à 5, dans lequel le dispositif de rattrapage de l'usure (7) présente une unité de poursuite (21) pour asservir la précontrainte et/ou la position angulaire de l'unité de roue libre continue (27) disposée sur l'arbre de broche (12).

7. Dispositif d'embrayage (1) selon la revendication 6, dans lequel l'unité de poursuite (21) est réalisée en forme de clavette et peut être déplacée dans la direction transversale du dispositif d'embrayage (1) ou dans la direction périphérique (1) du dispositif d'embrayage (1).

8. Dispositif d'embrayage (1) selon la revendication 6 ou 7, dans lequel l'unité de poursuite (21) est fixée à la bague de rampe (8) ou à un écrou de broche (25) de l'entraînement à broche (9) ou est réalisée d'une seule pièce avec la bague de rampe (8) ou l'écrou de broche (25).

9. Dispositif d'embrayage (1) selon au moins l'une quelconque des revendications 6 à 8, dans lequel une extrémité de ressort (14, 15) du ressort enroulé (13) ou un levier d'actionnement de la roue libre se trouve en appui avec mouvement de glissement avec une surface d'appui (20) de l'unité de poursuite (21).

10. Dispositif d'embrayage (1) selon la revendication 9, dans lequel l'extrémité de ressort (15) du ressort enroulé (13) ou le levier d'actionnement de la roue libre qui se trouve en appui avec mouvement de glissement avec la surface d'appui (20) de l'unité de poursuite (21) est la même extrémité de ressort (15) ou le même levier d'actionnement qui peut être sollicité(e) par le doigt (17).
